# EUROPÄISCHE PATENTSCHRIFT

(11) **EP 0 751 820 B1**
(45) Veröffentlichungstag und Bekanntmachung des Hinweises auf die Patenterteilung: **22.07.1998**
(21) Anmeldenummer: 95913019.6
(22) Anmeldetag: 13.03.1995
(51) Int. Cl.: B01F 5/04, F01N 3/20

(54) **KOMBINIERTE EINBRING- UND MISCHVORRICHTUNG**
COMBINED FEED AND MIXING INSTALLATION
SYSTEME COMBINE D'AMENEE ET DE MELANGE

(30) Priorität: 25.03.1994 DE 4410237
(43) Veröffentlichungstag der Anmeldung: 08.01.1997
(73) Patentinhaber: SIEMENS AKTIENGESELLSCHAFT, 80333 München (DE)
(72) Erfinder: HÜTTENHOFER, Klaus, D-90562 Heroldsberg (DE); HERR, Wolfgang, D-96114 Hirschaid (DE); SPREHE, Josef, D-90768 Fürth (DE); SPIELMANN, Horst, D-91083 Baiersdorf (DE)
(86) Internationale Anmeldenummer: DE9500340
(87) Internationale Veröffentlichungsnummer: WO9526226

(56) Entgegenhaltungen:
- EP-A- 0 167 060
- DE-U- 8 810 887
- FR-A- 2 341 040

## Beschreibung

Die Erfindung bezieht sich auf eine kombinierte Einbring- und Mischvorrichtung zur Einbringung eines ersten Strömungsmediums in ein gasförmiges und in einem Strömungskanal in einer Strömungsrichtung geführtes zweites Strömungsmedium und zur Vermischung der Strömungsmedien, mit mindestens einem das erste Strömungsmedium führenden Rohr mit mindestens einer Einbringöffnung und einem bezüglich der Strömungsrichtung hinter der Einbringöffnung angeordneten Mischeinsatz, wobei, bezogen auf eine Querschnittsfläche A und einen hydraulischen Durchmesser d_{hydr} des Strömungskanals, 0,05 bis 10 Einbringöffnungen pro m² Querschnittsfläche vorgesehen sind und ein Abstand a zwischen Einbringöffnung und Mischeinsatz 0,05 bis 3 d_{hydr} beträgt.

Eine kombinierte Einbring- und Mischvorrichtung geht aus der FR-A-2 341 040 A1 hervor.

Bei vielen industriellen Anwendungen ist eine möglichst gleichmäßige Zumischung von einem flüssigen oder gasförmigen Stoffstrom zu einem anderen flüssigen oder gasförmigen Stoffstrom zur Erzielung einer hohen Prozeßausnutzung erforderlich. So ist beispielsweise für die katalytische Reduktion von in Ab- oder Rauchgas enthaltenen Stickoxiden nach dem Verfahren der selektiven katalytischen Reduktion (SCR-Verfahren) die Zudosierung eines Reduktionsmittels in gasförmiger Form zu dem zu entstickenden Abgas- oder Rauchgasstrom erforderlich, und zwar vor dem Katalysator. Als Reduktionsmittel wird üblicherweise ein Ammoniak-Luftgemisch in das Rauchgas eingedüst, wobei der zu dosierende Ammoniak-Luftvolumenstrom im Vergleich zum Abgas- oder Rauchgasstrom sehr klein ist. Dieser zu dosierende Ammoniak-Luftvolumenstrom beträgt üblicherweise etwa 2 bis 5 Volumenprozent des Abgas- oder Rauchgasstromes.

Um das zur Entstickung des Abgas- oder Rauchgases benötigte Katalysatorvolumen möglichst klein wählen zu können, ist eine gleichmäßige Ausnutzung des Katalysators über den gesamten Abgaskanalquerschnitt anzustreben. Diese Tatsache macht es erforderlich, das Ammoniak-Luftgemisch möglichst gleichmäßig über den gesamten Abgaskanalquerschnitt einzudüsen und mit dem Abgas zu vermischen.

Die gleichmäßige Zugabe und Vermischung eines relativ kleinen Flüssigkeits- oder Gasstromes zu bzw. mit einem relativ großen Flüssigkeits- oder Gasstrom ist strömungsdynamisch schwierig und deshalb technisch sehr aufwendig. Derzeit wird dieses Problem dadurch gelöst, daß im Abgaskanal eine Vielzahl von einzeln einstellbaren Eindüsrohren mit einer Vielzahl von Düsen installiert wurde, um eine über den gesamten Querschnitt des Abgaskanals gleichmäßige Verteilung der Düsen und damit der Ammoniak-Luftgemisch-Eintrittsstellen in das Rauchgas zu erhalten. Nachteilhaft ist bei dieser Lösung ein durch die Vielzahl der Eindüsrohre verursachter Druckverlust in dem Rauchgaskanal. Desweiteren erfordert diese Lösung einen sehr großen apparativen Aufwand bezüglich der Rohrleitungen, der Düsen, der Regelventile und der gesamten Zudosierungssteuerung oder -regelung. Außerdem ist die Einstellung eines solchen Systems bei der Inbetriebnahme sehr zeit- und kostenintensiv.

Der Erfindung liegt daher die Aufgabe zugrunde, eine Vorrichtung anzugeben, mit der bei vernachlässigbarem Druckverlust, geringem apparativen Aufwand sowie geringem Aufwand bei der Inbetriebnahme eine Einbringung eines ersten Strömungsmediums in ein zweites Strömungsmedium und eine über den gesamten Querschnitt eines Strömungskanals homogene Verteilung des ersten Strömungsmediums erreicht werden.

Diese Aufgabe wird erfindungsgemäß gelöst durch eine kombinierte Einbring- und Mischvorrichtung zur Einbringung eines ersten Strömungsmediums in ein gasförmiges und in einem Stromungskanal in einer Strömungsrichtung geführtes zweites Strömungsmedium und zur Vermischung der Strömungsmedien, mit mindestens einem das erste Strömungsmedium führenden Rohr mit mindestens einer Einbringöffnung und einem bezüglich der Strömungsrichtung hinter der Einbringöffnung angeordneten Mischeinsatz, wobei, bezogen auf eine Querschnittsfläche A und einen hydraulischen Durchmesser d_{hydr} des Strömungskanals, 0,05 bis 10 Einbringöffnungen pro m² Querschnittsfläche vorgesehen sind und ein Abstand a zwischen Einbringöffnung und Mischeinsatz 0,05 bis 3 d_{hydr} beträgt, wobei der Mischeinsatz Mischelemente aufweist, die relativ zum hydraulischen Durchmesser klein und in einer Ebene, die in einem Winkel zur Strömungsrichtung ausgerichtet ist, in untereinander parallelen Reihen angeordnet sind, wobei die Mischelemente jeder Reihe gleichsinnig zueinander und gegensinnig zu den Mischelementen jeder benachbarten Reihe im Bezug zu der Ebene geneigt sind.

Der hydraulische Durchmesser ist hierbei definiert als die vierfache Querschnittsfläche A des Strömungskanals dividiert durch dessen Umfang.

Erfindungsgemäß wird, bedingt durch die geringe Zahl von im Strömungskanal angeordneten Rohren und Einbringöffnungen, der apparative Aufwand sowie der Kostenaufwand für die Einbringung des zuzugebenden Strömungsmediums besonders gering. Gleichzeitig ist auch der Druckverlust in dem Strömungskanal gegenüber den aus dem Stand der Technik bekannten Lösungen erheblich verringert. Mittels des im Strömungskanal angeordneten Mischeinsatzes wird eine homogene Verteilung des an nur wenigen Punkten in den Rauchgaskanal eingebrachten Strömungsmediums in dem vom Rauchgaskanal geführten Strömungsmedium erreicht. Der durch den Mischeinsatz verursachte Druckabfall kann durch die Wahl eines geeigneten Mischeinsatzes erheblich unter dem von einer Vielzahl von Eindüsrohren verursachten Druckverlust liegen.

Insbesondere bei der Auslegung der kombinierten Einbring- und Mischvorrichtung für fossilbefeuerte Kraftwerke mit einigen hundert Megawatt elektrischer Leistung hat es sich als vorteilhaft erwiesen, wenn etwa 0,1 bis 1 Einbringöffnung pro m² Querschnittsfläche vorgesehen sind und/oder wenn der Abstand a etwa 0,1 bis 1 d_{hydr.} beträgt.

Desweiteren sind in einer solchen Vorrichtung in vorteilhafter Weise bezüglich eines vernachlässigbaren Druckabfalls 0,01 bis 5, vorzugsweise 0,05 bis 1, Rohr pro Quadratmeter der Querschnittsfläche A vorgesehen.

Für eine homogene Verteilung des in das zweite Strömungsmedium eingebrachten ersten Strömungsmediums ist es allgemein erforderlich, daß das bereits im Strömungskanal befindliche Strömungsmedium eine möglichst gleichmäßige Geschwindigkeitsverteilung über den gesamten Querschnitt des Strömungskanals aufweist. Liegt nun am Einbringort des ersten Strömungsmediums kein ausreichend homogenes Strömungsprofil vor, ist es vorteilhaft, wenn in Strömungsrichtung des zweiten Strömungsmediums vor den Einbringöffnungen und dem Mischeinsatz Strömungsleitmittel vorgesehen sind. Solche Strömungsleitmittel sind beispielsweise Leitbleche und ähnliche Vorrichtungen.

Weitere vorteilhafte Ausgestaltungen der kombinierten Einbring- und Mischvorrichtung sind den übrigen Unteransprüchen zu entnehmen.

Eine besonders bevorzugte Verwendung der erfindungsgemäß kombinierten Einbring- und Mischvorrichtung ist die Einbringung von gasförmigem Ammoniak, z. B. eines Ammoniak-Luftgemisches, in ein stickoxidhaltiges Gasgemisch, z. B. das Rauchgas fossilgefeuerter Kraftwerksanlagen oder Automobilabgase, und die Vermischung des Ammoniaks und des stickoxidhaltigen Gasgemisches. Alternativ zu dem Ammoniak-Luftgemisch kann prinzipiell jede Ammoniak freisetzende Substanz, insbesondere eine wäßrige Harnstofflösung, verwendet sein.

Ausführungsbeispiele der Erfindung werden anhand einer Zeichnung näher erläutert. Dabei zeigen:
- Figur 1: ein konventionelles System zur Eindüsung und gleichzeitig homogenen Verteilung von Ammoniak in einen Rauchgaskanal;
- Figur 2: eine erfindungsgemäße kombinierte Einbring- und Mischvorrichtung zur Einbringung von Ammoniak in ein in einem Rauchgaskanal geführtes Rauchgas;
- Figur 3: die Anordnung der kombinierten Einbring- und Mischvorrichtung gemäß Figur 2 in der Rauchgasleitung eines fossilbefeuerten 600 Megawatt-Kraftwerks; und
- Figur 4: eine weitere erfindungsgemäße kombinierte Einbring- und Mischvorrichtung mit einem Einsatz zur Unterteilung des Strömungskanals.

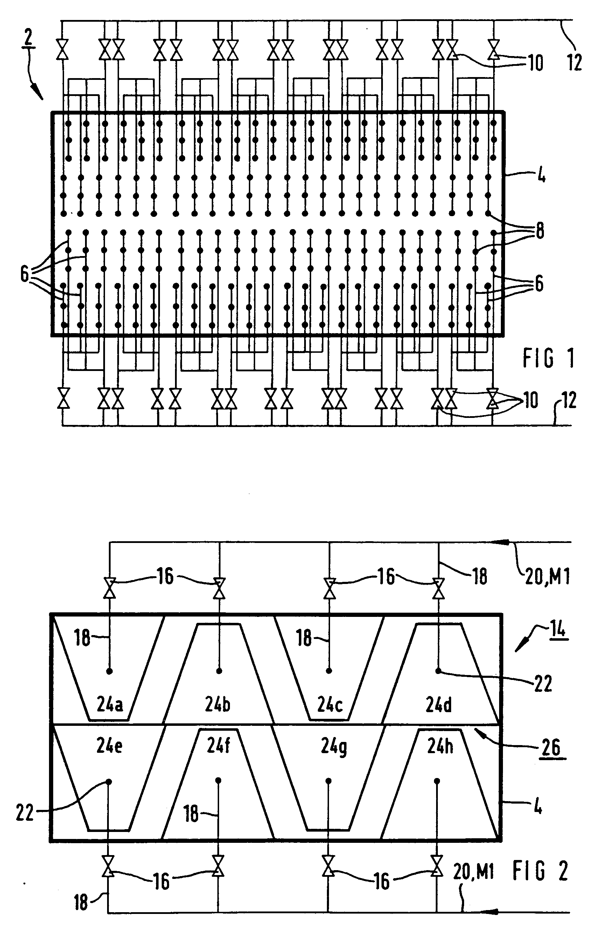

In den Figuren 1 bis 4 haben gleiche Teile gleiche Bezugszeichen.

Figur 1 zeigt in Aufsicht auf den Querschnitt eines Rauchgas-oder Strömungskanals 4 ein konventionelles System 2 zur Einbringung von Ammoniak in ein hier senkrecht zur Darstellungsebene strömendes Rauchgas. Das System 2 umfaßt eine Vielzahl von Eindüs- oder Einbringrohren 6, die im Rauchgaskanal 4 gleichmäßig verteilt angeordnet sind und als Einbringöffnungen Düsenköpfe 8 aufweisen. Die Eindüsrohre 6 sind eingangsseitig über je ein einstellbares Ventil 10 mit einer Zuführungsleitung 12 für ein Ammoniak-Luftgemisch verbunden.

Bedingt durch die Vielzahl der im Rauchgaskanal 4 angeordneten Einbringrohre 6 wird ein nicht vernachlässigbarer Druckverlust, der beispielsweise zu Lasten der elektrischen Leistung einer Kraftwerksanlage geht, verursacht. Ebenso ist der apparative Aufwand sehr hoch. Dieser kann beispielsweise bei einem 600 MW-Kraftwerk etwa 30 bis 50 Eindüsrohre 6 mit jeweils regelbarem Ventil 10 und einer Düsenanzahl von etwa 1600 Düsenköpfen 8 betrafen. Zur Inbetriebnahme und Wartung eines solchen Systems 2 ist ein hoher zeitlicher und kostenintensiver Aufwand erforderlich.

In Figur 2 ist eine erfindungsgemäße kombinierte Einbring- und Mischvorrichtung 14 gezeigt. In der hier gezeigten Aufsicht erkennt man acht mit je einem Stellventil 16 versehene Eindüsrohre 18, die eingangsseitig mit Zuführungsleitungen 20 für ein Ammoniak-Luftgemisch M1 verbunden sind und ausgangsseitig in als Einbringöffnungen vorgesehene Düsenköpfe 22 münden.

Zum direkten Vergleich der erfindungsgemäßen Vorrichtung 14 mit dem in Figur 1 diskutierten und aus dem Stand der Technik bekannten, konventionellen Eindüssystem 2 ist der aus der Figur 1 bekannte Strömungskanal 4 eingezeichnet. Im Ausführungsbeispiel beträgt der Querschnitt A dieses Strömungskanals 4 etwa 8 m², wodurch sich bei der hier vorgegebenen Querschnittsform von 2 m x 4 m ein hydraulischer Durchmesser von etwa 2,67 m ergibt. Der hydraulische Durchmesser d_{hydr.} ist dabei definiert als die vierfache Querschnittsfläche A dividiert durch den Umfang U des Strömungskanals 4.

In der zeichnerischen Darstellung hinter den Düsenköpfen 22 gelegen sind acht Mischelemente 24a bis 24h, die in zwei Reihen verschachtelt sind, angeordnet. Diese zu einem Mischeinsatz 26 gehörenden Mischelemente 24a bis 24h sind trapezförmig und jeweils zur schmalen Kante des Trapezes hin aus der Darstellungsebene nach unten heraus geneigt. Der Neigungswinkel im Bezug zur Darstellungsebene kann dabei zwischen 10 und 60 °, vorzugsweise zwischen 30 bis 45 °, betragen. Ein im Strömungskanal 4 geführtes Strömungsmedium strömt dabei vorzugsweise senkrecht zur gewählten Darstellungsebene, und zwar in die Darstellungsebene hinein von oben nach unten. Mittels dieser Mischelemente 24a bis 24h wird sowohl eine lokale Verwirbelung des Strömungsmediums mit dem in das Strömungsmedium eingebrachten Ammoniak-Luftgemisch M1 als auch eine sich über den gesamten Querschnitt des Strömungskanals 4 ausdehnende Vermischung erreicht. Für die homogene Verteilung des in das Strömungsmedium eingebrachten Ammoniak-Luftgemisches über den gesamten Querschnitt des Strömungskanals 4 ist es vorteilhaft, wenn 0,5 bis 50 Mischelemente 24 pro m² Strömungskanalquerschnitt vorgesehen sind, wobei diese Anzahl vorzugsweise zwischen 0,5 und 10 Mischelementen pro m² liegt.

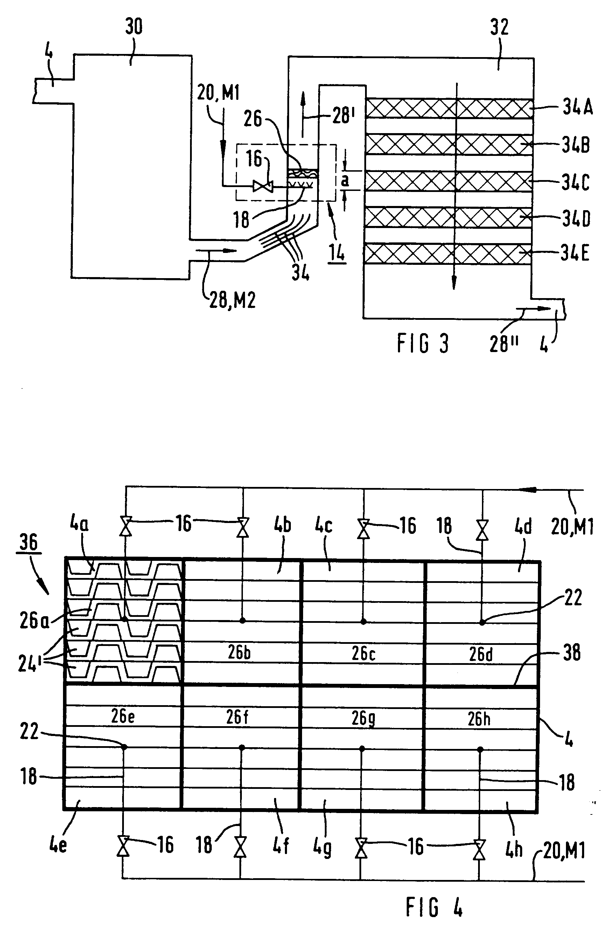

In dem in Figur 3 schematisch dargestellten Ausschnitt aus der Rauchgasleitung 4 einer hier nicht weiter dargestellten fossilbefeuerten Kraftwerksanlage ist die kombinierte Einbring- und Mischvorrichtung 14 gemäß Figur 2 in Strömungsrichtung eines hier vorliegenden Strömungsmediums M2, und zwar eines stickoxidhaltigen Rauchgases 28, zwischen einem Dampferzeuger 30 und einem DeNOₓ-Reaktor 32 angeordnet.

Beim Betrieb der Kraftwerksanlage strömt das stickoxidhaltige Rauchgas 28 aus dem Dampferzeuger 30 über im Rauchgaskanal angeordnete Strömungsleitbleche 34 zur kombinierten Einbring- und Mischvorrichtung 14. Die Strömungsleitbleche 34 dienen zur Homogenisierung des Geschwindigkeitsprofils des Rauchgases 28, so daß das Rauchgas 28 mit etwa gleicher Geschwindigkeit über den gesamten Querschnitt des Rauchgaskanals 4 die Eindüsrohre 18 erreicht.

An den Einbringrohren 18 wird, bezogen auf den Volumenstrom des Rauchgases 28, etwa 2 bis 5 Volumenprozent eines über die Zuführungsleitung 20 geführten und mittels des Ventils 16 dosierten Ammoniak-Luftgemisches M1 in das Rauchgas 28 eingebracht. In dem in Strömungsrichtung des Rauchgases 28 hinter den Einbringrohren 18 angeordneten Mischeinsatz 26 wird eine Vermischung des Ammoniak-Luft-Gemisches mit dem Rauchgas 28 erreicht, so daß ein homogen mit Ammoniak versetztes Rauchgas 28' dem DeNOₓ-Reaktor 32 zugeführt wird.

An im DeNOₓ-Reaktor 32 in Ebenen übereinander angeordneten Katalysatoren 34a bis 34e, sogenannten DeNOₓ-Katalysatoren, werden die im Rauchgas 28' enthaltenen Stickoxide zusammen mit dem Ammoniak durch Kontaktierung an den Katalysatoren 34a bis 34e katalytisch zu Stickstoff und Wasser umgesetzt. Den DeNOₓ-Reaktor 32 verläßt deshalb ein stickoxid- und ammoniakfreies Rauchgas 28''. Aufgrund der homogenen Verteilung des Ammoniaks im Rauchgas 28 werden die Katalysatoren 34a bis 34e über den gesamten Querschnitt gleichmäßig ausgenutzt.

Der Abstand a des Mischeinsatzes 26 von den Einbringrohren 18 soll im allgemeinen zwischen 0,05 und 3 d_{hydr.} liegen. Vorzugsweise beträgt dieser Abstand a zwischen 0,1 und 1 d_{hydr.}

Figur 4 zeigt ein weiteres Ausführungsbeispiel einer kombinierten Einbring- und Mischvorrichtung 36. Man erkennt wieder die aus der Figur 2 bekannten Teile: Rauchgaskanal 4, Stellventile 16, Eindüsrohre 18, Zuführungsleitung 20 für ein Ammoniak/ Luft-Gemisch M1 und Düsenköpfe 22. Zusätzlich ist ein Einsatz 38 vorgesehen, der den Strömungskanal 4 über eine Länge von etwa 3 d_{hydr.} in acht Teilkanäle 4a bis 4h unterteilt. Außerdem ist jedem Teilkanal 4a bis 4h ein als Einbringöffnung vorgesehener Düsenkopf 22 und ein gegenüber der Figur 2 vom Aufbau prinzipiell gleicher, aber verkleinerter Mischeinsatz 26a bis 26h zugeordnet. Jeder dieser Mischeinsätze 26a bis 26h umfaßt 24 in Reihen angeordnete und verschachtelte trapezförmige Mischelemente 24'. Aus Gründen der Übersichtlichkeit sind die Mischelemente 24' nur beim Mischeinsatz 26a eingezeichnet. Selbstverständlich weisen auch die anderen Mischeinsätze 26b bis 26h dieselbe Anzahl und Konfiguration von Mischelementen 24' auf wie der Mischeinsatz 26a.

Durch den hier vorgesehenen Einsatz 38 ist eine vollständigere und intensivere Mischung des hier eingebrachten Ammoniak/Luft-Gemisches M1 mit dem im Strömungskanal 4 geführten Strömungsmedium M2, z. B. mit dem stickoxidhaltigen Rauchgas 28 gemäß Figur 3, möglich. Ein großräumiger Konzentrationsausgleich eventuell vorhandener NOₓ- oder NH₃-Schieflagen ist allerdings eher mit dem Mischeinsatz 26 gemäß Figur 2 möglich. Es wird daher vom Einzelfall abhängen, welche Variante als kombinierte Einbring- und Mischvorrichtung 14, 36 gewählt wird.

## Patentansprüche

1. Kombinierte Einbring- und Mischvorrichtung (14,36) zur Einbringung eines ersten Strömungsmediums (M1) in ein gasförmiges und in einem Strömungskanal (4) in einer Strömungsrichtung geführtes zweites Strömungsmedium (M2) und zur Vermischung der Strömungsmedien (M1,M2), mit mindestens einem das erste Strömungsmedium (M1) führenden Rohr (18) mit mindestens einer Einbringöffnung (22) und einem bezüglich der Strömungsrichtung nach der Einbringöffnung (22) angeordneten Mischeinsatz (26, 26a bis 26h), wobei, bezogen auf eine Querschnittsfläche A und einen hydraulischen Durchmesser d_{hydr} des Strömungskanals (4), 0,05 bis 10 Einbringöffnungen (22) pro m² Querschnittsfläche vorgesehen sind und ein Abstand a zwischen Einbringöffnung (22) und Mischeinsatz (26, 26a bis 26h) 0,05 bis 3 d_{hydr} beträgt,
wobei
der Mischeinsatz (26, 26a bis 26h) Mischelemente (24a bis 24h, 24') aufweist, die relativ zum hydraulischen Durchmesser klein und in einer Ebene, die in einem Winkel zur Strömungsrichtung ausgerichtet ist, in untereinander parallelen Reihen angeordnet sind, wobei die Mischelemente (24a bis 24h, 24') jeder Reihe gleichsinnig zueinander und gegensinnig zu den Mischelementen (24a bis 24h, 24') jeder benachbarten Reihe im Bezug zu der Ebene geneigt sind.

2. Kombinierte Einbring- und Mischvorrichtung (14, 36) nach Anspruch 1,
**dadurch gekennzeichnet,** daß 0,1 bis 1 Einbringöffnungen (22) pro m² Querschnittsfläche A vorgesehen sind.

3. Kombinierte Einbring- und Mischvorrichtung (14, 36) nach Anspruch 1 oder 2,
**dadurch gekennzeichnet,** daß der Abstand a 0,1 bis 1 d_{hydr}. beträgt.

4. Kombinierte Einbring- und Mischvorrichtung (14, 36) nach einem der Ansprüche 1 bis 3,
**dadurch gekennzeichnet,** daß 0,05 bis 5 Rohre (18) pro m² Querschnittsfläche vorgesehen sind.

5. Kombinierte Einbring- und Mischvorrichtung (14, 36) nach Anspruch 4,
**dadurch gekennzeichnet,** daß 0,1 bis 1 Rohr pro m² Querschnittsfläche vorgesehen sind.

6. Kombinierte Einbring- und Mischvorrichtung (14, 36) nach einem der Ansprüche 1 bis 5,
**dadurch gekennzeichnet,** daß in Strömungsrichtung des zweiten Strömungsmediums (M2) vor den Einbringöffnungen (22) und dem Mischeinsatz (26) Strömungsleitmittel (34) vorgesehen sind.

7. Kombinierte Einbring- und Mischvorrichtung (14, 36) nach einem der Ansprüche 1 bis 6,
**dadurch gekennzeichnet,** daß der Mischeinsatz (26) 0,5 bis 50 Mischelemente (24a bis 24h) pro m² Querschnittsfläche aufweist.

8. Kombinierte Einbring- und Mischvorrichtung (36) nach einem der Ansprüche 1 bis 7,
**dadurch gekennzeichnet,** daß ein Einsatz (38) zur Unterteilung des Strömungskanals (4) in Teilkanäle (4a bis 4h) mindestens vorgesehen ist, und daß in jedem Teilkanal (4a bis 4h) eine Einbringöffnung (22) und ein Mischeinsatz (26a bis 26h) vorgesehen sind.

9. Verwendung einer kombinierten Einbring- und Mischvorrichtung (14, 36) nach einem der Ansprüche 1 bis 8 zur Einbringung von gasförmigem Ammoniak in ein stickoxidhaltiges Gasgemisch und zur Vermischung des Ammoniaks und des stickoxidhaltigen Gasgemisches.

## Claims

1. Combined feed and mixing device (14, 36) for introducing a first fluid medium (M1) into a second fluid medium (M2) which is gaseous and is conducted in one direction of flow in a flow duct (4), and for mixing the fluid media (M1, M2), having at least one tube (18) having at least one feed orifice (22) and conducting the first fluid medium (M1), and a mixing insert (26, 26a to 26h) arranged downstream of the feed orifice (22) in relation to the direction of flow, where, based on a cross-sectional area A and a hydraulic diameter d_{hydr.} of the flow duct (4), 0.05 to 10 feed orifices (22) are provided per m² of cross-sectional area and the distance a between feed orifice (22) and mixing insert (26, 26a to 26h) is 0.05 to 3 d_{hydr.}, wherein the mixing insert (26, 26a to 26h) has mixing elements (24a to 24h, 24') which are small relative to the hydraulic diameter and are arranged in a plane which is orientated at an angle to the direction of flow in mutually parallel rows and the mixing elements (24a to 24h, 24') of each row are inclined in relation to the plane in the same direction with respect to one another and in the opposite direction to the mixing elements (24a to 24h, 24') of each adjacent row.

2. Combined feed and mixing device (14, 36) according to Claim 1, characterized in that 0.1 to 1 feed orifices (22) are provided per m² of cross-sectional area A.

3. Combined feed and mixing device (14, 36) according to Claim 1 or 2, characterized in that the distance a is 0.1 to 1 d_{hydr.}.

4. Combined feed and mixing device (14, 36) according to one of Claims 1 to 3, characterized in that 0.05 to 5 tubes (18) are provided per m² of cross-sectional area.

5. Combined feed and mixing device (14, 36) according to Claim 4, characterized in that 0.1 to 1 tube is provided per m² of cross-sectional area.

6. Combined feed and mixing device (14, 36) according to one of Claims 1 to 5, characterized in that flow baffle elements (34) are provided upstream of the feed orifices (22) and the mixing insert (26) in the direction of flow of the second fluid medium (M2).

7. Combined feed and mixing device (14, 36) according to one of Claims 1 to 6, characterized in that the mixing insert (26) has 0.5 to 50 mixing elements (24a to 24h) per m² of cross-sectional area.

8. Combined feed and mixing device (36) according to one of Claims 1 to 7, characterized in that one insert (38) at least is provided for subdividing the flow duct (4) into part-ducts (4a to 4h), and in that a feed orifice (22) and a mixing insert (26a to 26h) are provided in each part-duct (4a to 4h).

9. Use of a combined feed and mixing device (14, 36) according to one of Claims 1 to 8 for introducing gaseous ammonia into a nitrogen oxide-containing gas mixture and for mixing the ammonia and the nitrogen oxide-containing gas mixture.

## Revendications

1. Equipement combiné (14, 36) d'introduction et de mélange, destiné à introduire un premier fluide en écoulement (M1) dans un deuxième fluide en écoulement (M2), gazeux, passant dans une gaine d'écoulement (4) dans un sens d'écoulement, et à mélanger les fluides en écoulement (M1, M2), comportant au moins un tube (18) dans lequel passe le premier fluide en écoulement (M1), et un insert mélangeur (26, 26a à 26h), disposé en aval de l'orifice d'introduction (22) quand on regarde dans le sens de l'écoulement, en prévoyant, rapporté à une aire (A) de section transversale et à un diamètre hydraulique d_{hydr} de la gaine d'écoulement (4), de 0,05 à 10 orifices d'introduction (22) par m² d'aire de section transversale et une distance (a) entre l'orifice d'introduction (22) et l'insert mélangeur (26, 26a à 26h) de 0,05 à 3 d_{hydr}, dans lequel l'insert mélangeur (26, 26a à 26h) comporte des éléments mélangeurs (24a à 24h, 24'), qui sont petits par rapport au diamètre hydraulique et qui sont disposés en rangées parallèles les unes aux autres dans un plan faisant un angle avec le sens de l'écoulement, les éléments mélangeurs (24a à 24h, 24') de chaque rangée étant inclinés par rapport au plan, dans le même sens les uns par rapport aux autres, et en sens contraire par rapport aux éléments mélangeurs (24a à 24h, 24') de chaque rangée voisine.

2. Equipement combiné (14, 36) d'introduction et de mélange selon la revendication 1, caractérisé en ce que l'on prévoit de 0,1 à 1 orifice d'introduction (22) par m² d'aire (A) de section transversale.

3. Equipement combiné (14, 36) d'introduction et de mélange selon la revendication 1 ou 2, caractérisé en ce que la distance (a) est de 0,1 à 1 d_{hydr}.

4. Equipement combiné (14, 36) d'introduction et de mélange selon l'une des revendications 1 à 3, caractérisé en ce qu'il est prévu de 0,05 à 5 tubes (18) par m² d'aire de section transversale.

5. Equipement combiné (14, 36) d'introduction et de mélange selon la revendication 4, caractérisé en ce qu'il est prévu de 0,1 à 1 tube par m² d'aire de section transversale.

6. Equipement combiné (14, 36) d'introduction et de mélange selon l'une des revendications 1 à 5, caractérisé en ce qu'il est prévu des déflecteurs d'écoulement (34) en amont des orifices d'introduction (22) et de !`insert mélangeur (26) quand on regarde dans le sens d'écoulement du deuxième fluide en écoulement (M2).

7. Equipement combiné (14, 36) d'introduction et de mélange selon l'une des revendications 1 à 6, caractérisé en ce que l'insert mélangeur (26) comporte de 0,5 à 50 éléments mélangeurs (24a à 24h) par m² d'aire de section transversale.

8. Equipement combiné (36) d'introduction et de mélange selon l'une des revendications 1 à 7, caractérisé en ce qu'il est prévu au moins un insert (38) pour subdiviser la gaine d'écoulement (4) en gaines partielles (4a à 4h), et il est prévu dans chaque gaine partielle (4a à 4h) un orifice d'introduction (22) et un insert mélangeur (24a à 26h).

9. Utilisation d'un équipement combiné (14, 36) d'introduction et de mélange selon l'une des revendications 1 à 8, pour introduire de l'ammoniac gazeux dans un mélange gazeux contenant des oxydes d'azote, et pour mélanger l'ammoniac et le mélange gazeux contenant des oxydes d'azote.
